# EUROPÄISCHE PATENTSCHRIFT

(11) **EP 4 631 469 B1**
(45) Veröffentlichungstag und Bekanntmachung des Hinweises auf die Patenterteilung: **30.09.2026**
(21) Anmeldenummer: 24179749.7
(22) Anmeldetag: 04.06.2024
(51) Int. Cl.: A61C 1/06, A61C 1/00

(54) **ANTRIEBS- UND VERSORGUNGSEINHEIT FÜR DAS IMPLANTIEREN DENTALER IMPLANTATE**
DRIVE AND SUPPLY UNIT FOR IMPLANTING DENTAL IMPLANTS
UNITÉ D'ENTRAÎNEMENT ET D'ALIMENTATION POUR L'IMPLANTATION D'IMPLANTS DENTAIRES

(30) Priorität: 08.04.2024 EP 24168881
(43) Veröffentlichungstag der Anmeldung: 15.10.2025
(73) Patentinhaber: W & H Dentalwerk Bürmoos GmbH, 5111 Bürmoos (AT)
(72) Erfinder: SINZINGER, Markus, 5124 Haigermoos (AT); BECKE, Gunther, 5231 Schalchen (AT); KOOPMAN, Leon, 5020 Salzburg (AT); BRANDSTÄTTER, Andreas, 5120 St. Pantaleon (AT); LANG, Thomas, 5421 Adnet (AT)
(74) Vertreter: Benda, Ralf

(56) Entgegenhaltungen:
- WO-A2-02/26153
- US-A1- 2018 271 617
- US-A1- 2021 000 569

## Beschreibung

Die vorliegende Erfindung betrifft eine mit einer Hand haltbare Antriebs- und Versorgungseinheit für das Implantieren dentaler Implantate.

Vorrichtungen für das Implantieren dentaler Implantate sind gemäß dem Stand der Technik als Tischgeräte ausgebildet, siehe zum Beispiel Figur 1 der Patentanmeldung US 2018/0153466 A1. Eine derartige Vorrichtung umfasst ein Tisch-Steuergerät, das auf einer Arbeitsfläche abstellbar ist und üblicherweise ein im Wesentlichen quaderförmiges Außengehäuse aufweist. In dem Außengehäuse ist eine Steuervorrichtung zum Steuern des Tisch-Steuergeräts und/ oder eines mit dem Tisch-Steuergerät verbundenen dentalen Hand- oder Winkelstücks vorgesehen. Über eine Anschlussvorrichtung am Außengehäuse und einen daran anschließbaren Versorgungsschlauch ist das dentale Hand- oder Winkelstück und ein elektrischer Antriebsmotor mit dem Tisch-Steuergerät verbunden. Der Versorgungsschlauch versorgt den elektrischen Antriebsmotor mit elektrischer Antriebsenergie und Steuersignalen. Das Hand- oder Winkelstück ist lösbar mit einem Implantationswerkzeug verbindbar, das durch den Antriebsmotor in eine rotierende Bewegung versetzbar ist. Im oder am Außengehäuse ist des Weiteren eine Fördervorrichtung zum Fördern einer Behandlungs- und/ oder Kühlflüssigkeit vorgesehen. Die Fördervorrichtung umfasst eine Pumpe, welche eine Kühl- und Spülflüssigkeit von dem Tisch-Steuergerät über einen sich außerhalb des Versorgungsschlauchs und des Antriebsmotors bis zum Kopf des Hand- oder Winkelstücks erstreckenden Kühlmittelschlauch fördert. Am Tisch-Steuergerät ist des Weiteren üblicherweise eine Mensch-Maschine-Schnittstelle zum Bedienen, Einstellen und/ oder Auswählen von Parametern des Tisch-Steuergeräts und/ oder des mit dem Tisch-Steuergerät verbundenen Hand- oder Winkelstück und eine grafische Anzeigevorrichtung vorgesehen. Zum Steuern der dentalen Implantations-Vorrichtungen während der Behandlung ist eine Fußsteuerung kommunikativ mit dem Tisch-Steuergerät verbunden.

Viele Anwender empfinden diesen seit Jahrzehnten im Wesentlichen unveränderten Aufbau von dentalen Implantations-Vorrichtungen während der praktischen Arbeit hinderlich. Insbesondere der mehrteilige Aufbau mit dem Tisch-Steuergerät, dem davon entfernten Hand- oder Winkelstück und der ebenfalls davon entfernten Fußsteuerung und die Verbindung dieser Komponenten mit dem Versorgungsschlauch und gegebenenfalls einer Steuerleitung zwischen der Fußsteuerung und dem Tisch-Steuergerät sowie der Kühlmittelschlauch schränkt die Anwender in ihrer Bewegungsfreiheit ein und erfordert zusätzliche Aufmerksamkeit.

WO 02/26153 A2 offenbart ein schlauchloses dentales Behandlungsgerät, welches ein mit einem Dentalwerkzeug koppelbares Handstück und ein Versorgungsteil aufweist, wobei das Versorgungsteil eine elektrische Energiequelle für einen Antriebsmotor für das Dentalwerkzeug und eine Kühlmitteleinrichtung umfasst.

Der vorliegenden Erfindung liegt daher die Aufgabe zugrunde eine dentale Vorrichtung für das Implantieren dentaler Implantate zu schaffen, die den Anwendern das Arbeiten mit der dentalen Implantations-Vorrichtung erleichtert und es ihnen ermöglicht, der Behandlung mehr Aufmerksamkeit zu widmen.

Diese Aufgabe wird gemäß der vorliegenden Erfindung durch eine mit einer Hand haltbare Antriebs- und Versorgungseinheit für das Implantieren dentaler Implantate mit den Merkmalen des Anspruchs 1 und durch eine dentale Implantationsvorrichtung nach Anspruch 15 gelöst. Besonders vorteilhafte Ausführungsformen sind in den Unteransprüchen angeführt.

Die erfindungsgemäße, mit einer Hand haltbare Antriebs- und Versorgungseinheit für das Implantieren dentaler Implantate umfasst ein Außengehäuse, welches die Antriebs- und Versorgungseinheit von der Umgebung abgrenzt. In dem Außengehäuse sind ein Elektromotor zum rotierenden Antrieb eines dentalen Werkzeugs und eine Steuervorrichtung zum Steuern der Antriebs- und Versorgungseinheit angeordnet. Am oder im Außengehäuse sind eine erste Anschlussvorrichtung, eine zweite Anschlussvorrichtung und eine dritte Anschlussvorrichtung vorgesehen, wobei diese erste, zweite und dritte Anschlussvorrichtung eigenständige, voneinander getrennte Anschlussvorrichtungen sind. Die erste Anschlussvorrichtung ist zum lösbaren Anschließen eines dentalen Hand- oder Winkelstücks an die Antriebs- und Versorgungseinheit, zum mechanischen Übertragen einer von dem Elektromotor erzeugten rotierenden Antriebsbewegung auf eine Welle in dem Hand- oder Winkelstück und das damit verbundene dentale Werkzeug und zum Leiten eines Kühlfluids von der Antriebs- und Versorgungseinheit in das Hand- oder Winkelstück ausgebildet; die zweite Anschlussvorrichtung ist zum lösbaren Anschließen einer Batterie zur Versorgung des Elektromotors mit elektrischer Energie vorgesehen; und die dritte Anschlussvorrichtung ist zum lösbaren Anschließen eines Kühlfluidbehälters ausgebildet. Die drei Anschlussvorrichtungen sind insbesondere an drei unterschiedlichen Stellen oder Positionen an oder in dem Außengehäuse angeordnet.

Mit der erfindungsgemäßen, mit einer Hand haltbaren Antriebs- und Versorgungseinheit für das Implantieren dentaler Implantate (im Folgenden auch verkürzt als Antriebs- und Versorgungseinheit bezeichnet) ist somit eine dentale Implantations-Vorrichtung geschaffen, bei der alle notwendigen Komponenten zum Betrieb und zur Durchführung einer dentalen Implantation, einschließlich Hand- oder Winkelstück, Batterie und Behälter für oder mit Kühlfluid, mit einer, d.h. einer einzigen, Hand haltbar sind und/ oder im oder am Außengehäuse vorgesehen sind. Somit entfallen insbesondere alle sich außerhalb des Außengehäuses in die Umgebung erstreckenden Schlauch- und Leitungsverbindungen zu Energie- und Fluidquellen, wodurch die Handhabung der Implantations-Vorrichtung für den Anwender in vorteilhafter Weise erheblich erleichtert ist.

Mit der erfindungsgemäßen, mit einer Hand haltbaren Antriebs- und Versorgungseinheit für das Implantieren dentaler Implantate ist zusätzlich oder alternativ eine dentale Implantations-Vorrichtung geschaffen, bei der alle notwendigen Komponenten der dentalen Implantations-Vorrichtung einschließlich Hand- oder Winkelstück, Batterie und Kühlfluidbehälter während der Implantation eines dentalen Implantats relativ zu dem Patienten, der das Implantat erhält, und/ oder relativ zu dem die Implantation durchführenden Arzt bewegbar sind, insbesondere gemeinsam bewegbar sind. Dadurch ist die Handhabung der Implantations-Vorrichtung für den Anwender in vorteilhafter Weise erheblich erleichtert, da bei Bewegungen der Hand des Arztes mit der Antriebs- und Versorgungseinheit keine durch Schlauch- oder Leitungsverbindungen verursachte Torsions- oder Zugkräfte auf die Hand des Arztes wirken.

Während der Verwendung der mit einer Hand haltbaren Antriebs- und Versorgungseinheit oder der dentalen Implantationsvorrichtung ist an alle drei Anschlussvorrichtungen die der jeweiligen Anschlussvorrichtung zugeordnete Komponente (Hand- oder Winkelstück; Batterie; Kühlfluidbehälter) angeschlossen. Die Anordnung oder Positionierung der drei Anschlussvorrichtungen und somit der jeweiligen, damit verbundenen Komponente in oder an dem Außengehäuse ist somit in Bezug auf die Handhabbarkeit der Antriebs- und Versorgungseinheit, auf die Gewichtsverteilung, auf eine gute Sicht auf die Behandlungsstelle, auf die Bewegungsfreiheit während der Verwendung der Antriebs- und Versorgungseinheit und auf weitere anwendungstechnische Aspekte von äußerster Relevanz. Dazu wurde eine Vielzahl von Überlegungen, Studien und Tests mit Prototypen durchgeführt, um eine möglichst optimale Anordnung der drei Anschlussvorrichtungen und der jeweiligen, damit verbundenen Komponente in oder an dem Außengehäuse zu erreichen, insbesondere auch in Hinblick auf unterschiedliche Anatomien der Anwender, zum Beispiel Anwender mit kleinerem und/ oder zarterem Körperbau versus Anwender mit längeren und/ oder kräftigeren Gliedmaßen, insbesondere Armen und Händen. Die im gesamten Dokument beschriebenen Merkmale in Bezug auf die Anordnung oder Positionierung der drei Anschlussvorrichtungen sind Ergebnisse diese Überlegungen und Tests, mit dem Ziel einer möglichst vorteilhaften Gestaltung der mit einer Hand haltbaren Antriebs- und Versorgungseinheit für das Implantieren dentaler Implantate bzw. der dentalen Implantationsvorrichtung für alle Anwender, unabhängig von Körpergröße und Körperbau.

Vorzugsweise sind die erste Anschlussvorrichtung zum lösbaren Anschließen eines dentalen Hand- oder Winkelstücks und zumindest die zweite Anschlussvorrichtung oder die dritte Anschlussvorrichtung an unterschiedlichen und/ oder gegenüberliegenden Enden der Antriebs- und Versorgungseinheit angeordnet. Besonders bevorzugt ist die erste Anschlussvorrichtung an einem ersten Ende der Antriebs- und Versorgungseinheit und die zweite Anschlussvorrichtung zum lösbaren Anschließen einer Batterie an einem gegenüberliegenden zweiten Ende der Antriebs- und Versorgungseinheit angeordnet. Vorzugsweise sind die unterschiedlichen und/ oder gegenüberliegenden Enden entlang einer die Antriebs- und Versorgungseinheit durchsetzenden Längsachse angeordnet. Für die Handhabung der Antriebs- und Versorgungseinheit ist es vorteilhaft, wenn schwerere Komponenten, wie zum Beispiel das Hand- oder Winkelstück und die Batterie, zwecks Verteilung der Masse bzw. Masseausgleich an gegenüberliegenden Enden vorgesehen sind.

Vorzugsweise sind die erste Anschlussvorrichtung zum lösbaren Anschließen eines dentalen Hand- oder Winkelstücks und wahlweise die zweite Anschlussvorrichtung oder die dritte Anschlussvorrichtung, besonders bevorzugt die zweite Anschlussvorrichtung zum lösbaren Anschließen einer Batterie und/ oder eine damit verbundene Batterie, entlang der Längsachse der Antriebs- und Versorgungseinheit angeordnet. Für die Handhabung der Antriebs- und Versorgungseinheit ist es vorteilhaft, wenn schwerere Komponenten, wie zum Beispiel das Hand- oder Winkelstück und die Batterie, entlang einer Achse und insbesondere nahe der Hand oder dem Arm des Anwenders vorgesehen sind. Die Längsachse ist somit vorzugsweise als gemeinsame Längsachse der genannten Anschlussvorrichtungen und Komponenten ausgebildet. Die erste und die weitere, vorzugsweise die zweite, Anschlussvorrichtung, insbesondere auch das Hand- oder Winkelstück und die Batterie oder der Kühlfluidbehälter, sind vorzugsweise fluchtend entlang der (gemeinsamen) Längsachse angeordnet. Alternativ sind die erste und die weitere, vorzugsweise die zweite, Anschlussvorrichtung, insbesondere auch das Hand- oder Winkelstück und die Batterie oder der Kühlfluidbehälter, derart um die (gemeinsame) Längsachse angeordnet, dass sich die Längsachse zwischen diesen Bauteilen erstreckt. Vorzugsweise sind weitere, insbesondere schwerere, Komponenten der Antriebs- und Versorgungseinheit entlang der oder um die Längsachse angeordnet, zum Beispiel der Elektromotor und/ oder ein Getriebe. Durch diese Anordnung der Anschlussvorrichtungen, des Elektromotors und der Batterie, gegebenenfalls auch des Hand- oder Winkelstücks und des Getriebes, in Bezug auf die Längsachse der Antriebs- und Versorgungseinheit ist auch ein im Wesentlichen geradliniger Antriebsstrang gebildet, woraus konstruktive und montagetechnische Vorteile resultieren.

Vorzugsweise sind die erste Anschlussvorrichtung zum lösbaren Anschließen eines dentalen Hand- oder Winkelstücks und wahlweise die zweite Anschlussvorrichtung oder die dritte Anschlussvorrichtung, vorzugsweise die zweite Anschlussvorrichtung zum lösbaren Anschließen einer Batterie, in einer Schnittebene durch die Antriebs- und Versorgungseinheit angeordnet, die sich durch die gegenüberliegenden Enden der Antriebs- und Versorgungseinheit und durch eine Oberseite und Unterseite des Außengehäuses erstreckt. Für die Handhabung der Antriebs- und Versorgungseinheit ist es vorteilhaft, wenn schwerere Komponenten, wie zum Beispiel das Hand- oder Winkelstück und die Batterie, in einer Ebene, i.e. der Schnittebene, und insbesondere nahe der Hand oder dem Arm des Anwenders vorgesehen sind. Die jeweiligen Mittelachsen der ersten Anschlussvorrichtung und der zweiten oder dritten Anschlussvorrichtung und/ oder die Mittelachse der Antriebs- und Versorgungseinheit sind vorzugsweise in der Schnittebene angeordnet oder erstrecken sich darin, wodurch eine vorteilhafte Massenverteilung erreicht wird, insbesondere wenn das Hand- oder Winkelstück und die Batterie oder der Kühlmittelbehälter mit der jeweiligen Anschlussvorrichtung verbunden ist. Vorzugsweise sind weitere, insbesondere schwerere, Komponenten der Antriebs- und Versorgungseinheit in der Schnittebene angeordnet, zum Beispiel der Elektromotor und/ oder ein Getriebe. Durch die Anordnung des Elektromotors und der Batterie, gegebenenfalls auch des Getriebes, und der Anschlussvorrichtrungen in der Schnittebene der Antriebs- und Versorgungseinheit ist innerhalb der Antriebs- und Versorgungseinheit ein Antriebsstrang oder Antriebspaket gebildet, woraus konstruktive und montagetechnische Vorteile resultieren.

Vorzugsweise ist die andere Anschlussvorrichtung der zweiten oder dritten Anschlussvorrichtung, vorzugsweise die dritte Anschlussvorrichtung zum lösbaren Anschließen eines Kühlfluidbehälters, versetzt zu und/ oder außerhalb der Schnittebene angeordnet. Besonders bevorzugt ist die andere Anschlussvorrichtung, insbesondere die dritte Anschlussvorrichtung und/ oder ein damit verbundener Kühlfluidbehälter, seitlich und/ oder seitlich versetzt zu und/ oder neben der Schnittebene angeordnet. Besonders bevorzugt ist die andere Anschlussvorrichtung, insbesondere die dritte Anschlussvorrichtung und/ oder ein damit verbundener Kühlfluidbehälter, versetzt und/ oder seitlich versetzt zu und/ oder neben den beiden übrigen Anschlussvorrichtungen, vorzugsweise der ersten und zweiten Anschlussvorrichtung, angeordnet. Diese versetzte oder seitliche Anordnung einer der Anschlussvorrichtungen relativ zu den anderen beiden Anschlussvorrichtungen ermöglicht es in vorteilhafter Weise eine kompakte, insbesondere nicht zu lange Antriebs- und Versorgungseinheit und/ oder dentale Implantationsvorrichtung zu schaffen.

Vorzugsweise ist die andere Anschlussvorrichtung der zweiten oder dritten Anschlussvorrichtung, insbesondere die dritte Anschlussvorrichtung zum lösbaren Anschließen eines Kühlfluidbehälters und/ oder ein damit verbundener Kühlfluidbehälter, versetzt zu der Längsachse der Antriebs- und Versorgungseinheit angeordnet. Besonders bevorzugt ist die andere Anschlussvorrichtung, insbesondere die dritte Anschlussvorrichtung und/ oder ein damit verbundener Kühlfluidbehälter, seitlich und/ oder seitlich versetzt zu und/ oder neben der Längsachse angeordnet. Diese versetzte oder seitliche Anordnung einer der Anschlussvorrichtungen relativ zu den anderen beiden Anschlussvorrichtungen ermöglicht es in vorteilhafter Weise eine kompakte, insbesondere nicht zu lange Antriebs- und Versorgungseinheit und/ oder dentale Implantationsvorrichtung zu schaffen.

Vorzugsweise ist die versetzt zu und/ oder außerhalb der Schnittebene angeordnete zweite oder dritte Anschlussvorrichtung, insbesondere die dritte Anschlussvorrichtung zum lösbaren Anschließen eines Kühlfluidbehälters und/ oder ein damit verbundener Kühlfluidbehälter, zwischen den beiden in der Schnittebene angeordneten Anschlussvorrichtung vorgesehen. Zusätzlich oder alternativ ist die versetzt oder seitlich zu der Schnittebene angeordnete zweite oder dritte Anschlussvorrichtung, insbesondere die dritte Anschlussvorrichtung zum lösbaren Anschließen eines Kühlfluidbehälters, in Bezug auf die Längsachse zwischen den beiden in der Schnittebene angeordneten Anschlussvorrichtung vorgesehen. Besonders bevorzugt ist die zweite oder dritte Anschlussvorrichtung, insbesondere die dritte Anschlussvorrichtung, in Bezug auf die erste Anschlussvorrichtung zum lösbaren Anschließen eines dentalen Hand- oder Winkelstücks rückversetzt oder in Richtung der anderen, vorzugsweise der zweiten, Anschlussvorrichtung versetzt angeordnet. Unter anderem durch diese Merkmale ist, vorzugsweise an einer Endfläche der Außenhülse, ein Freiraum gebildet, der an einer ersten Seite durch die vorstehende, und vorzugsweise seitlich versetzte, erste Anschlussvorrichtung und an einer weiteren, zweiten Seite durch die zweite oder dritte Anschlussvorrichtung, insbesondere die dritte Anschlussvorrichtung, begrenzt ist. In diesem Freiraum findet während der sachgerechten Verwendung der Antriebs- und Versorgungseinheit ein Teil der Hand des Anwenders Platz, vorzugsweise kann die Antriebs- und Versorgungseinheit bzw. die dentale Implantationsvorrichtung auf einem Teil der in dem Freiraum aufgenommenen Hand, zum Beispiel dem Handrücken und/ oder dem Handgelenk, gelagert werden, wodurch in vorteilhafter Weise die Handhabung und Ergonomie der Antriebs- und Versorgungseinheit noch weiter verbessert ist.

Vorzugsweise erstreckt sich durch die Antriebs- und Versorgungseinheit eine Mittelebene, wobei die erste Anschlussvorrichtung auf einer ersten Seite der Mittelebene und die zweite und dritte Anschlussvorrichtung auf einer anderen, zweiten Seite der Mittelebene angeordnet sind. Vorzugsweise ist die Mittelebene rechtwinkelig oder im Wesentlichen im rechten Winkel zur Schnittebene angeordnet. Durch diese Merkmale ist in vorteilhafter Weise eine ungehinderte Sicht des Anwenders auf die erste Anschlussvorrichtung und ein damit verbundenes Hand- oder Winkelstück und die Behandlungsstelle sichergestellt.

Vorzugsweise ist der Elektromotor und gegebenenfalls ein Getriebe anschließend an die erste Anschlussvorrichtung und/ oder fluchtend mit der ersten Anschlussvorrichtung angeordnet. Das Getriebe ist insbesondere zum Ändern der Drehzahl und/ oder des Drehmoments der vom Elektromotor erzeugten Rotationsbewegung vorgesehen. Vorzugsweise weisen die erste Anschlussvorrichtung und der Elektromotor und gegebenenfalls das Getriebe eine gemeinsame Mittelachse auf, um und/ oder entlang der sie angeordnet sind. Diese Merkmale erbringen konstruktive, zum Beispiel platzsparende, und montagetechnische Vorteile.

Vorzugsweise ist der Elektromotor mit der ersten Anschlussvorrichtung und gegebenenfalls das Getriebe auf der ersten Seite der Mittelebene angeordnet. Insbesondere ist der Elektromotor und gegebenenfalls das Getriebe derart in Bezug auf die zweite Anschlussvorrichtung und/ oder eine an die zweiten Anschlussvorrichtung angeschlossene Batterie und/ oder die dritte Anschlussvorrichtung und/ oder einen mit der dritten Anschlussvorrichtung verbundenen Kühlfluidbehälter angeordnet, dass sich die Mittelebene zwischen dem Elektromotor auf der ersten Seite der Mittelebene und der zweiten Anschlussvorrichtung und/ oder der an die zweite Anschlussvorrichtung angeschlossenen Batterie und/ oder der dritten Anschlussvorrichtung und/ oder einem mit der dritten Anschlussvorrichtung verbundenen Kühlfluidbehälter auf der zweiten Seite der Mittelebene erstreckt. Die zweite und dritte Anschlussvorrichtung befinden sich somit insbesondere auf der zweiten Seite der Mittelebene. Durch diese Merkmale ist in vorteilhafter Weise eine ungehinderte Sicht des Anwenders auf die erste Anschlussvorrichtung und ein damit verbundenes Hand- oder Winkelstück und die Behandlungsstelle sichergestellt.

Vorzugsweise umfasst die Steuervorrichtung zum Steuern der Antriebs- und Versorgungseinheit eine Platine, die zwischen dem Elektromotor und der zweiten Anschlussvorrichtung, insbesondere einer Aufnahme der zweiten Anschlussvorrichtung, und/ oder einer mit der zweiten Anschlussvorrichtung verbundenen Batterie angeordnet ist. Vorzugsweise weist die Platine mehrere Abschnitte auf, die gewinkelt mit einem Winkel ungleich 0° zueinander angeordnet sind, wobei zumindest ein Abschnitt zwischen dem Elektromotor und der zweiten Anschlussvorrichtung und/ oder einer mit der zweiten Anschlussvorrichtung verbundenen Batterie angeordnet ist. Besonders bevorzugt ist die Platine oder zumindest ein Abschnitt davon parallel zur Mittelebene angeordnet und/ oder erstreckt sich in der Mittelebene. Diese Merkmale bewirken eine platzsparende Anordnung der Steuervorrichtung, insbesondere der Platine, im Außengehäuse der Antriebs- und Versorgungseinheit.

Vorzugsweise weist die zweite Anschlussvorrichtung eine Öffnung und eine, vorzugsweise zylindrische, Aufnahme auf, in welche die Batterie einführbar ist. Vorzugsweise ist die Öffnung an dem zweiten Ende oder einer zweiten Endfläche des Außengehäuses angeordnet. Vorzugsweise ist die Öffnung und/ oder Aufnahme in der Schnittebene angeordnet und/ oder durchsetzt die Schnittebene die Öffnung und/ oder Aufnahme. Vorzugsweise ist die Aufnahme derart bemessen, dass sie zumindest einen Teil der Batterie oder die gesamte Batterie umschließt. Vorzugsweise ist am Ende der Öffnung ein Verschluss, zum Beispiel ein Deckel, vorgesehen, der die Öffnung verschließt. Vorzugsweise sind in der Aufnahme, insbesondere gegenüber der Öffnung, elektrische Kontakte vorgesehen zur elektrischen Verbindung mit und/ oder Übertragung elektrischer Energie von der Batterie an die Antriebs- und Versorgungseinheit, insbesondere den Elektromotor. Diese Merkmale garantieren in vorteilhafter Weise eine zuverlässige und sichere Energieversorgung der Antriebs- und Versorgungseinheit.

Vorzugsweise weist die dritte Anschlussvorrichtung eine Öffnung und eine, vorzugsweise zylindrische, Aufnahme auf, in welche der Kühlfluidbehälter einführbar ist. Die Öffnung kann an dem zweiten Ende oder der zweiten Endfläche des Außengehäuses angeordnet sein. Alternativ ist die Öffnung der dritten Anschlussvorrichtung, so wie im Vorstehenden für die dritte Anschlussvorrichtung beschrieben, zwischen der ersten und zweiten Anschlussvorrichtung und/ oder seitlich versetzt zu der Längsachse oder Schnittebene und/ oder außerhalb der Schnittebene angeordnet. Vorzugsweise ist die Aufnahme derart bemessen, dass sie zumindest einen Teil des Kühlfluidbehälters oder den gesamten Kühlfluidbehälter umschließt. Vorzugsweise umfasst die dritte Anschlussvorrichtung eine fluidübertragende Schnittstelle zur Verbindung mit einem Kühlfluidbehälter, über die Kühlfluid von dem Kühlfluidbehälter in die Antriebs- und Versorgungseinheit übertragbar ist. Besonders bevorzugt ist die fluidübertragende Schnittstelle gegenüber der Öffnung der dritten Anschlussvorrichtung vorgesehen. Diese Merkmale garantieren in vorteilhafter Weise eine zuverlässige und sichere Leitung des Kühlfluids in die Antriebs- und Versorgungseinheit.

Besonders bevorzugt umfasst die fluidübertragende Schnittstelle zumindest eine Fluidleitung, die sich von der dritten Anschlussvorrichtung, insbesondere von der fluidübertragenden Schnittstelle, zur ersten Anschlussvorrichtung erstreckt und über die Kühlfluid von dem mit der dritten Anschlussvorrichtung verbundenen Kühlfluidbehälter an das an die erste Anschlussvorrichtung angeschlossene Hand- oder Winkelstück übertragbar ist. Die Fluidleitung erstreckt sich vorzugsweise vollständig und/ oder über ihre gesamte Länge innerhalb der Antriebs- und Versorgungseinheit und / oder des Außengehäuses. Diese Merkmale, insbesondere das Vorsehen der Fluidleitung in dem Außengehäuse, erleichtern in vorteilhafter Weise die Handhabung der Antriebs- und Versorgungseinheit und/ oder der dentalen Implantationsvorrichtung, da der Anwender nicht auf außerhalb der Antriebs- und Versorgungseinheit verlaufende Fluidleitungen achten muss.

Vorzugsweise weist die die erste Anschlussvorrichtung einen Kupplungszapfen oder ein Kupplungsrohr auf, auf den das Hand- oder Winkelstück fluid- und Antriebskraft übertragend aufsteckbar ist. Vorzugsweise ist der Kupplungszapfen oder das Kupplungsrohr an dem ersten Ende oder der ersten Endfläche des Außengehäuses angeordnet. Vorzugsweise ist der Kupplungszapfen oder das Kupplungsrohr in der Schnittebene angeordnet und/ oder durchsetzt die Schnittebene den Kupplungszapfen oder das Kupplungsrohr. Vorzugsweise ist der Kupplungszapfen oder das Kupplungsrohr hohl ausgebildet, so dass sich eine Welle des Hand- oder Winkelstücks und/ oder des Elektromotors in den Kupplungszapfen oder das Kupplungsrohr erstreckt, um eine vom Elektromotor erzeugte Drehbewegung und/ oder Drehmoment auf das Hand- oder Winkelstück und ein damit verbindbares dentalen Werkzeug zu übertragen. Vorzugsweise ist an dem Kupplungszapfen oder Kupplungsrohr eine weitere fluidübertragende Schnittstelle zum Übertragen des Kühlfluids von der Antriebs- und Versorgungseinheit auf das Hand- oder Winkelstück vorgesehen. Die fluidübertragende Schnittstelle ist insbesondere fluidübertragend mit der Fluidleitung verbunden. Die fluidübertragende Schnittstelle umfasst zum Beispiel eine Bohrung in dem Kupplungszapfen oder Kupplungsrohr. Diese Merkmale ermöglichen in vorteilhafter Weise eine zuverlässige Verbindung des Hand- oder Winkelstücks mit der Antriebs- und Versorgungseinheit und eine zuverlässige Weiterleitung des Kühlfluids und der Drehbewegung und/ oder des Drehmoments.

Die Batterie kann wahlweise als nicht wiederaufladbare Primärbatterie oder in Bezug auf die Auswirkungen auf die Umwelt vorteilhafterweise als wiederholt aufladbarer Akkumulator ausgebildet sein. Zum Laden des Akkumulators ist dieser vorzugsweise von der Antriebs- und Versorgungseinheit, insbesondere der zweiten Anschlussvorrichtung, lösbar und mit einem von der Antriebs- und Versorgungseinheit getrennten, eigenständigen Ladegerät verbindbar. Alternativ ist es auch möglich, dass die Antriebs- und Versorgungseinheit Ladekontakte aufweist, die an ein Ladegerät und/ oder an ein Versorgungsnetz für elektrische Energie anschließbar sind, so dass der Akkumulator in vorteilhafter Weise zum Laden nicht von der Antriebs- und Versorgungseinheit gelöst werden muss.

Alle drei Anschlussvorrichtungen sind vorzugsweise als lösbare Anschlussvorrichtungen ausgebildet, so dass die der jeweiligen Anschlussvorrichtung zugeordnete Komponente (Hand- oder Winkelstück; Batterie; Kühlfluidbehälter) von der Anschlussvorrichtung lösbar und/ oder austauschbar ist. Zumindest eine der Anschlussvorrichtungen ist zum Beispiel als Steckverbindung, Schraubverbindung, Bajonettverbindung oder ähnliche lösbare Verbindung ausgebildet, wodurch dem Anwender in vorteilhafter Weise ein einfaches und rasches Anschließen, Lösen und/ oder Austauschen der jeweiligen Komponente ermöglicht wird.

Aus dem Vorstehenden ist zu erkennen, dass alle drei Anschlussvorrichtungen in oder an dem Außengehäuse zusammengefasst sind. Das Außengehäuse ist vorzugsweise als gemeinsames Außengehäuse für alle drei Anschlussvorrichtungen ausgebildet. Insbesondere verbindet und/ oder umfasst und/ oder integriert das Außengehäuse die drei Anschlussvorrichtungen, so dass die Antriebs- und Versorgungseinheit für das Implantieren dentaler Implantate eine kompakte Einheit bildet, die gut in der Hand liegt und einfach zu handhaben ist.

Eine dentale Implantationsvorrichtung umfasst eine mit einer Hand haltbare Antriebs- und Versorgungseinheit wie sie im Vorstehenden und im gesamten Dokument beschrieben ist, sowie ein Hand- oder Winkelstück, eine Batterie und einen Kühlfluidbehälter. Vorzugsweise ist das Hand- oder Winkelstück, die Batterie lösbar mit der zweiten Anschlussvorrichtung und der Kühlfluidbehälter lösbar mit der dritten Anschlussvorrichtung verbindbar.

Die Erfindung wird nachfolgend anhand bevorzugter Ausführungsbeispiele und Bezug nehmend auf die beigefügten Zeichnungen erläutert. Es zeigt die
Figur 1 ein Ausführungsbeispiel einer mit einer Hand haltbaren Antriebs- und Versorgungseinheit für das Implantieren dentaler Implantate mit Blick auf eine Vorderseite oder erste Endfläche der Antriebs- und Versorgungseinheit, an der die erste Anschlussvorrichtung zum lösbaren Anschließen eines dentalen Hand- oder Winkelstücks vorgesehen ist;
Figur 2 die Rückseite oder zweite Endfläche der Antriebs- und Versorgungseinheit der Figur 1, die zweite Anschlussvorrichtung zum lösbaren Anschließen einer Batterie und die dritte Anschlussvorrichtung zum lösbaren Anschließen eines Kühlfluidbehälters;
Figur 3 die Antriebs- und Versorgungseinheit der Figur 1 mit angeschlossenem Hand- oder Winkelstück und Kühlfluidbehälter;
Figur 4 die Antriebs- und Versorgungseinheit der Figur 1 mit angeschlossener Batterie und angeschlossenem Kühlfluidbehälter;
Figur 5 eine Schnittdarstellung der Antriebs- und Versorgungseinheit der Figur 1;
Figur 6 die Antriebs- und Versorgungseinheit der Figur 1 in einer teiltransparenten Darstellung;
Figur 7 ein Ausführungsbeispiel einer mit einer Hand haltbaren Antriebs- und Versorgungseinheit für das Implantieren dentaler Implantate mit einer jeweils durch einen Verschluss verschließbaren zweiten Anschlussvorrichtung zum lösbaren Anschließen einer Batterie und dritten Anschlussvorrichtung zum lösbaren Anschließen eines Kühlfluidbehälters.

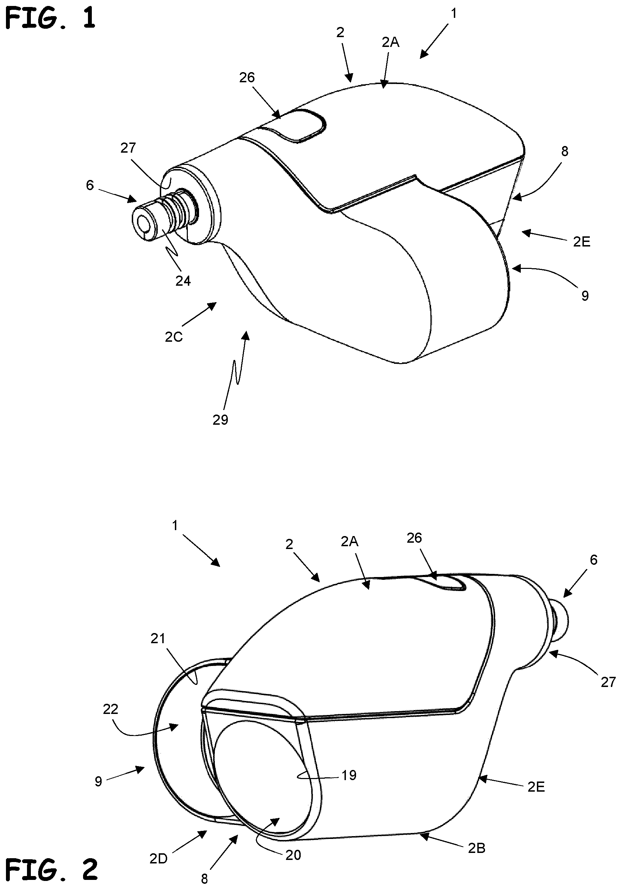

Die in den Figuren 1 - 7 dargestellte, mit einer Hand haltbaren Antriebs- und Versorgungseinheit 1 für das Implantieren dentaler Implantate umfasst ein Außengehäuse 2, welches die Antriebs- und Versorgungseinheit 1 von der Umgebung abgrenzt. Das Außengehäuse 2 weist mehrere Seiten oder Flächen auf: eine Oberseite 2A, die bei korrektem Halten der Antriebs- und Versorgungseinheit 1, zum Beispiel während dem Setzen eines Implantats, das obere Ende der Antriebs- und Versorgungseinheit 1 bildet. Auf der Oberseite 2A kann vorzugsweise eine Mensch-Maschine-Schnittstelle 26 vorgesehen sein, zum Beispiel ein Bedienelement, ein Stellelement oder eine Anzeige. Der Oberseite 2A gegenüber ist eine Unterseite 2B angeordnet. Die Unterseite 2B bildet bei korrektem Halten der Antriebs- und Versorgungseinheit 1, zum Beispiel während des Implantierens, das untere Ende der Antriebs- und Versorgungseinheit 1. Eine erste Endfläche oder erstes Ende 2C bildet eine Seitenwand des Außengehäuses 2 und verbindet somit die Oberseite 2A mit der Unterseite 2B. An dem ersten Ende 2C ist insbesondere eine erste Anschlussvorrichtung 6 vorgesehen. Eine zweite Endfläche oder zweites Ende 2D bildet eine weitere Seitenwand des Außengehäuses 2 und verbindet somit ebenfalls die Oberseite 2A mit der Unterseite 2B. An der zweiten Endfläche 2D ist vorzugsweise zumindest eine weitere Anschlussvorrichtung, zum Beispiel eine zweite Anschlussvorrichtung 8 oder dritte Anschlussvorrichtung 9, vorgesehen. Vorzugsweise liegen die erste Endfläche 2C und die zweite Endfläche 2D einander gegenüber. An den weiteren Seiten der Antriebs- und Versorgungseinheit 1, insbesondere der Außenhülse 2, sind weitere Seitenflächen 2E vorgesehen, die sowohl die Oberseite 2A mit der Unterseite 2B als auch die erste Endfläche 2C und die zweite Endfläche 2D miteinander verbinden.

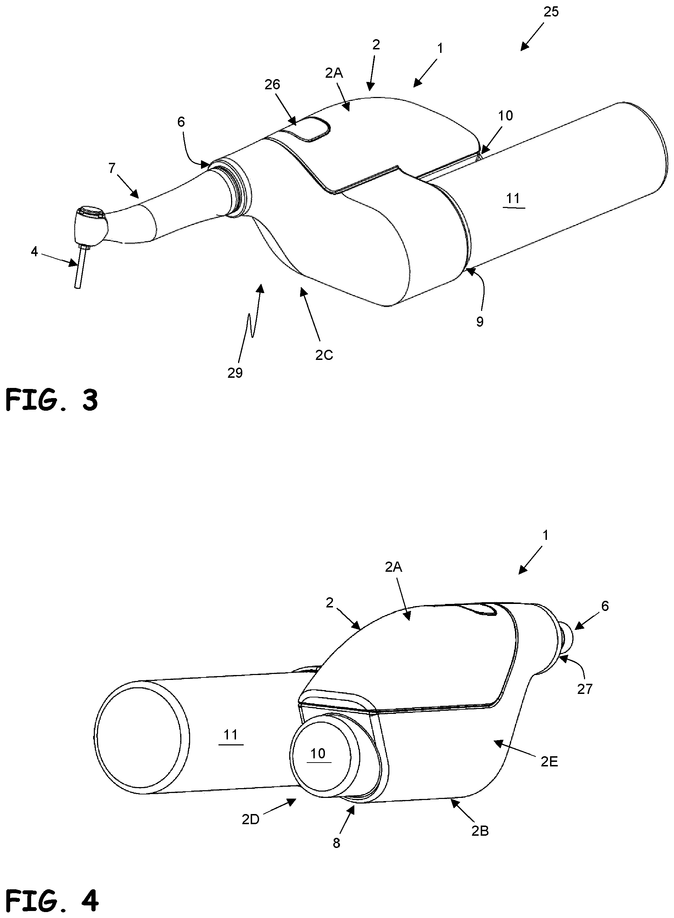

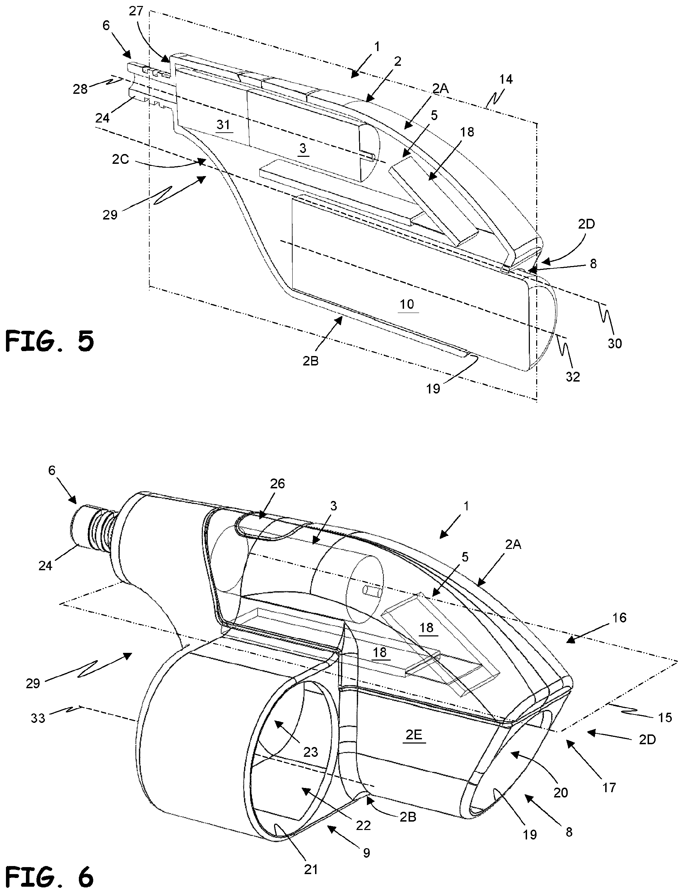

Die am Außengehäuse 2, insbesondere an der ersten Endfläche 2C, angeordnete erste Anschlussvorrichtung 6 ist zum lösbaren Anschließen eines dentalen Hand- oder Winkelstücks 7 (siehe Figur 3) an die Antriebs- und Versorgungseinheit 1, zum mechanischen Übertragen einer von einem Elektromotor 3 (siehe Figuren 5 und 6) erzeugten rotierenden Antriebsbewegung auf eine Welle in dem Hand- oder Winkelstück 7 und zum Leiten eines Kühlfluids von der Antriebs- und Versorgungseinheit 1 in das Hand- oder Winkelstück 7 vorgesehen. Die erste Anschlussvorrichtung 6 weist einen Kupplungszapfen 24 auf, auf den das Hand- oder Winkelstück 7 fluid- und Antriebskraft übertragend aufsteckbar ist.

Der Kupplungszapfen 24 ist rotationssymmetrisch und/ oder zylindrisch geformt. Vorzugsweise ist das Hand- oder Winkelstück 7 drehbar an dem Kupplungszapfen 24 befestigt, so dass, das Hand- oder Winkelstück 7 zur besseren Handhabung relativ zu der Antriebs- und Versorgungseinheit 1 während einer dentalen Behandlung gedreht werden kann.

Der Kupplungszapfen 24 ist zur Aufnahme einer Welle, welche den Elektromotor mit einer Welle im Hand- oder Winkelstück 7 und einem dentalen Werkzeug 4 verbindet, hohl ausgebildet. Der Kupplungszapfen 24 umfasst zumindest eine Bohrung, durch welche ein Kühlfluid von der Antriebs- und Versorgungseinheit 1 in das Hand- oder Winkelstück 7 übertragbar ist.

Der Kupplungszapfen 24 erstreckt sich, insbesondere geradlinig, von der ersten Endfläche 2C, vorzugsweise von einer Kupplungsfläche 27, entlang einer Kupplungszapfen-Mittelachse 28. Die Kupplungsfläche 27 ist vorzugsweise kreisrund ausgebildet. Der Kupplungszapfen 24 und insbesondere die Kupplungsfläche 27 sind nahe einer Seitenflächen 2E angeordnet. Der Kupplungszapfen 24 und die Kupplungsfläche 27 sind somit nicht mittig, sondern versetzt zur Mitte der Endfläche 2C angeordnet. Die Kupplungsfläche 27, insbesondere deren Umfangskante, grenzen vorzugsweise unmittelbar an eine Seitenfläche 2E, siehe Figuren 2 und 4. Unter anderem durch diese seitliche Anordnung des Kupplungszapfen 24 und/ oder der Kupplungsfläche 27 ist ein Freiraum 29 gebildet. In diesem Freiraum 29 findet während der sachgerechten Verwendung und/ oder korrekten Haltung während einer Implantationsbehandlung der Antriebs- und Versorgungseinheit 1 ein Teil der Hand des Anwenders Platz.

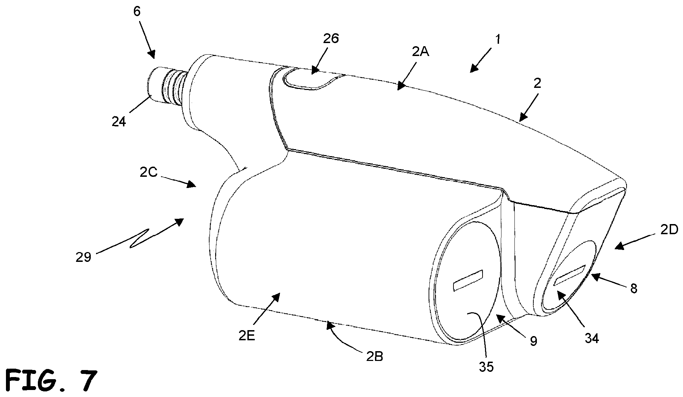

An die am oder im Außengehäuse 2, insbesondere an der zweiten Endfläche 2D, vorgesehene zweite Anschlussvorrichtung 8 ist lösbar einer Batterie 10, insbesondere ein wiederholt aufladbarer Akkumulator, zur Versorgung des Elektromotors 3 mit elektrischer Energie anschließbar. Die zweite Anschlussvorrichtung 8 umfasst eine Öffnung 19 und eine zylindrische Aufnahme 20, in welche die Batterie 10 einführbar und lagerbar ist. Die zylindrische Aufnahme 20 kann derart bemessen sein, dass sie nur einen Teil der Batterie 10 aufnimmt, so dass ein Abschnitt der Batterie 10 aus der Aufnahme 20 und/ oder dem Außengehäuse 2 ragt, so dass die Batterie 10 unkompliziert aus der Aufnahme 20 entnommen bzw. in die Aufnahme 20 eingeführt werden kann, siehe Figuren 3 und 4. Alternativ, siehe Figur 7, ist die Aufnahme 20 derart bemessen, dass sie die gesamte Batterie 10 aufnimmt und/ oder umschließt, und vorzugsweise durch einen Verschluss 34, zum Beispiel einen Deckel, verschließbar ist, so dass das Eindringen von Verschmutzungen in die Aufnahme 20 verringert ist. Der Verschluss 34 ist relativ zu der Öffnung 19 bewegbar, zum Beispiel drehbar, verschraubbar, entfernbar oder klappbar, so dass die Batterie 10 ungehindert in die Aufnahme 20 einführbar und daraus entnehmbar ist.

Die am oder im Außengehäuse 2 vorgesehene dritte Anschlussvorrichtung 9 ist zum lösbaren Anschließen eines Kühlfluidbehälters 11 ausgebildet. Die dritte Anschlussvorrichtung 9 weist eine Öffnung 21 und eine, vorzugsweise zylindrische, Aufnahme 22 auf. in welche der Kühlfluidbehälter 11 einführbar ist. An einer der Öffnung 21 gegenüberliegenden Wand der dritten Anschlussvorrichtung 9 ist eine fluidübertragende Schnittstelle 23 zur Verbindung mit dem Kühlfluidbehälter 11 vorgesehen, über die Kühlfluid von dem Kühlfluidbehälter 11 in die Antriebs- und Versorgungseinheit 1 übertragbar ist. Die zylindrische Aufnahme 22 kann derart bemessen sein, dass sie nur einen Teil des Kühlfluidbehälters 11 aufnimmt, so dass ein Abschnitt des Kühlfluidbehälters 11 aus der Aufnahme 22 und/ oder dem Außengehäuse 2 ragt, so dass der Kühlfluidbehälter 11 unkompliziert aus der Aufnahme 22 entnommen bzw. in die Aufnahme 22 eingeführt werden kann, siehe Figuren 3 und 4. Alternativ, siehe Figur 7, ist die Aufnahme 22 derart bemessen, dass sie den gesamten Kühlfluidbehälter 11 aufnimmt und/ oder umschließt, und vorzugsweise durch einen Verschluss 35, zum Beispiel einen Deckel, verschließbar ist, so dass das Eindringen von Verschmutzungen in die Aufnahme 22 verringert ist. Der Verschluss 35 ist relativ zu der Öffnung 21 bewegbar, zum Beispiel drehbar, verschraubbar, entfernbar oder klappbar, so dass der Kühlfluidbehälter 11 ungehindert in die Aufnahme 22 einführbar und daraus entnehmbar ist.

Die erste, zweite und dritte Anschlussvorrichtung 6, 8, 9 sind eigenständige, voneinander getrennte Anschlussvorrichtungen, die an unterschiedlichen Positionen der mit einer Hand haltbare Antriebs- und Versorgungseinheit 1 und/ oder des Außengehäuses 2 angeordnet sind.

Die erste Anschlussvorrichtung 6 zum lösbaren Anschließen eines dentalen Hand- oder Winkelstücks 7 und die zweite Anschlussvorrichtung 8 zum lösbaren Anschließen einer Batterie 10 sind an den gegenüberliegenden Enden oder Endflächen 2C, 2D angeordnet. Die Enden 2C, 2D und/ oder erste und zweite Anschlussvorrichtung 6, 8 sind entlang einer die Antriebs- und Versorgungseinheit 1 durchsetzenden Längsachse 30 angeordnet. Die erste und die zweite Anschlussvorrichtung 6, 8, vorzugsweise auch das Hand- oder Winkelstück 7 und die Batterie 10, sind derart um die Längsachse 30 angeordnet, dass sich die Längsachse 30 zwischen diesen Bauteilen 6, 8, 7, 10 erstreckt.

Wie aus den Figuren 5 und 6 erkennbar ist, sind weitere Komponenten der Antriebs- und Versorgungseinheit 1 entlang der oder um die Längsachse 30 angeordnet, zum Beispiel der Elektromotor 3 und/ oder ein Getriebe 31. Der Elektromotor 3, das Getriebe 31 und die erste Anschlussvorrichtung 6 sind entlang einer Kupplungszapfen-Elektromotor-Mittelachse 28 angeordnet, die insbesondere auch die Rotationsachse des Elektromotors 3 bildet, wodurch eine kompakte Triebeinheit gebildet ist. Die Batterie 10 ist unterhalb des Elektromotors 3 und/ oder des Getriebes 31 und/ oder der ersten Anschlussvorrichtung 6 angeordnet, siehe Figur 5. Der Elektromotor 3 und/ oder das Getriebe 31 und/ oder die erste Anschlussvorrichtung 6 sind über der Batterie 10 angeordnet. Der Elektromotor 3 und/ oder das Getriebe 31 und/ oder die erste Anschlussvorrichtung 6 einerseits und die Batterie 10 andererseits sind in unterschiedlichen Ebenen innerhalb des Außengehäuses 2 angeordnet. Die Aufnahme 20 und/ oder die Batterie 10 weisen eine Batterie-Aufnahme-Mittelachse 32 auf, die parallel oder im Wesentlichen parallel zur Kupplungszapfen-Elektromotor-Mittelachse 28 angeordnet ist. Durch diese Anordnung des Elektromotors 3, des Getriebes 31 und der ersten und zweiten Anschlussvorrichtung 6, 8, gegebenenfalls mit der Batterie 10 und dem Hand- oder Winkelstück 7, ist der gesamte Antriebsstrang kompakt und geradlinig in einem Teilvolumen der Antriebs- und Versorgungseinheit 1 oder des Außengehäuses 2 angeordnet.

Die erste Anschlussvorrichtung 6 zum lösbaren Anschließen eines dentalen Hand- oder Winkelstücks 7 und die zweite Anschlussvorrichtung 8 zum lösbaren Anschließen einer Batterie 10 sind des Weiteren in einer Schnittebene 14 durch die Antriebs- und Versorgungseinheit 1 angeordnet. Die Schnittebene 14 erstreckt sich durch die gegenüberliegenden Enden 2C, 2D der Antriebs- und Versorgungseinheit 1 und durch die Oberseite 2A und Unterseite 2B des Außengehäuses 2, siehe Figur 5. Die jeweiligen Achsen 28, 30, 32 sind in der Schnittebene 14 angeordnet oder erstrecken sich darin. Auch sind der Elektromotor 3 und/ oder das Getriebe 31 in der Schnittebene 14 angeordnet und/ oder von dieser geschnitten.

Die dritte Anschlussvorrichtung 9 zum lösbaren Anschließen eines Kühlfluidbehälters 11 und/ oder der darin aufgenommene Kühlfluidbehälter 11 ist/ sind versetzt zu und/ oder außerhalb der Schnittebene 14 angeordnet. Die dritte Anschlussvorrichtung 9 ist versetzt zu der ersten und zweiten Anschlussvorrichtung 6, 8 angeordnet. Eine Fluid-Mittelachse 33 der dritten Anschlussvorrichtung 9 und/ oder des Kühlfluidbehälter 11 ist parallel oder im Wesentlichen parallel zu den Achsen 28, 30, 32 angeordnet. Die dritte Anschlussvorrichtung 9 ist (in Bezug auf die Längsachse 30) zwischen den beiden in der Schnittebene 14 angeordneten Anschlussvorrichtungen 6, 8 vorgesehen. Die dritte Anschlussvorrichtung 9 ist in Bezug auf die erste Anschlussvorrichtung 6 zum lösbaren Anschließen eines dentalen Hand- oder Winkelstücks 7 rückversetzt und/ oder in Richtung der zweiten, Anschlussvorrichtung 8 versetzt angeordnet. Auch durch diese Rückversetzung der dritten Anschlussvorrichtung 9 ist der im Vorstehenden beschriebene Freiraum 29 gebildet.

In der Figur 6 ist zu erkennen, dass sich durch die Antriebs- und Versorgungseinheit 1 eine Mittelebene 15 erstreckt, wobei die erste Anschlussvorrichtung 6 zum Anschluss des Hand- oder Winkelstücks 7 auf einer ersten Seite 16 der Mittelebene 15 und die zweite und dritte Anschlussvorrichtung 8, 9 auf einer anderen, zweiten Seite 17 der Mittelebene 15 angeordnet sind. Die Mittelebene 15 ist rechtwinkelig oder im Wesentlichen im rechten Winkel zur Schnittebene 14 angeordnet. Die beiden Aufnahmen 20, 22 sind somit unterhalb der Mittelebene 15 und/ oder im Wesentlichen nebeneinander angeordnet und/ oder an dem Ende 2D der Antriebs- und Versorgungseinheit 1 angeordnet. Das gemeinsame Vorsehen der Aufnahmen 20, 22 am rückwärtigen Ende 2D ermöglicht einen ungehinderten Zugang zu den Aufnahmen 20, 22 und damit einen unkomplizierten Austausch der Batterie 10 und des Kühlfluidbehälters 11.

Der Elektromotor 3 und das Getriebe 31 sind auf der ersten Seite 16 der Mittelebene 15 angeordnet. Der Elektromotor 3 und das Getriebe 31 sind des Weiteren derart in Bezug auf die zweite Anschlussvorrichtung 8 und/ oder eine an die zweiten Anschlussvorrichtung 8 angeschlossene Batterie 10 und die dritte Anschlussvorrichtung 9 und/ oder einen mit der dritten Anschlussvorrichtung 9 verbundenen Kühlfluidbehälter 11 angeordnet, dass sich die Mittelebene 15 zwischen dem Elektromotor 3 und dem Getriebe 31 auf der ersten Seite 16 der Mittelebene 15 und der zweiten Anschlussvorrichtung 8 und der dritten Anschlussvorrichtung 9 auf der zweiten Seite 17 der Mittelebene 15 erstreckt. Die zweite und dritte Anschlussvorrichtung 8, 9 und/ oder die jeweiligen Aufnahmen 20, 22 befinden sich somit auf der zweiten Seite 17 der Mittelebene 15.

Im Außengehäuse 2 ist des Weiteren eine Steuervorrichtung 5 angeordnet, die zum Steuern der Antriebs- und Versorgungseinheit 1 und/ oder des damit verbundenen Hand- oder Winkelstücks 7 vorgesehen ist, siehe Figuren 5 und 6. Die Steuervorrichtung 5 weist eine Platine 18 auf, die zwischen dem Elektromotor 3 und der zweiten Anschlussvorrichtung 8, insbesondere der Aufnahme 20 angeordnet ist. Die Platine 18 weist mehrere Abschnitte auf, die gewinkelt mit einem Winkel ungleich 0° zueinander angeordnet sind, wobei zumindest ein Abschnitt zwischen dem Elektromotor 3 und der zweiten Anschlussvorrichtung 8 angeordnet ist. Zumindest ein Abschnitt der Platine 18 ist parallel zur Mittelebene 15 angeordnet und/ oder erstreckt sich in der Mittelebene 15.

Die Figur 3 zeigt eine dentale Implantationsvorrichtung 25, die eine mit einer Hand haltbare Antriebs- und Versorgungseinheit 1 und daran angeschlossen ein Hand- oder Winkelstück 7, eine Batterie 10 und einen Kühlfluidbehälter 11 umfasst. Es ist zu erkennen, dass die dentale Implantationsvorrichtung 25 eine kompakte, stabile Einheit bildet, die durch das Außengehäuse 2 definiert oder begrenzt ist und an dem die drei Anschlussvorrichtung 6, 8, 9 gemeinsam, an ergonomisch optimierten Positionen angeordnet sind.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Mit einer Hand haltbare Antriebs- und Versorgungseinheit (1) für das Implantieren dentaler Implantate mit einem Außengehäuse (2), welches die Antriebs- und Versorgungseinheit (1) von der Umgebung abgrenzt, umfassend:
einen im Außengehäuse (2) angeordneten Elektromotor (3) zum rotierenden Antrieb eines dentalen Werkzeugs (4),
eine im Außengehäuse (2) angeordneten Steuervorrichtung (5) zum Steuern der Antriebs- und Versorgungseinheit (1),
eine am Außengehäuse (2) vorgesehene erste Anschlussvorrichtung (6) zum lösbaren Anschließen eines dentalen Hand- oder Winkelstücks (7) an die Antriebs- und Versorgungseinheit (1), zum mechanischen Übertragen einer von dem Elektromotor (3) erzeugten rotierenden Antriebsbewegung auf eine Welle in dem Hand- oder Winkelstück (7) und zum Leiten eines Kühlfluids von der Antriebs- und Versorgungseinheit (1) in das Hand- oder Winkelstück (7),
eine am oder im Außengehäuse (2) vorgesehene zweite Anschlussvorrichtung (8) zum lösbaren Anschließen einer Batterie (10) zur Versorgung des Elektromotors (3) mit elektrischer Energie, und
eine am oder im Außengehäuse (2) vorgesehene dritte Anschlussvorrichtung (9) zum lösbaren Anschließen eines Kühlfluidbehälters (11),
wobei die erste, zweite und dritte Anschlussvorrichtung (6, 8, 9) eigenständige, voneinander getrennte Anschlussvorrichtungen sind, **dadurch gekennzeichnet, dass** die erste Anschlussvorrichtung (6) zum lösbaren Anschließen eines dentalen Hand- oder Winkelstücks (7) und die Öffnung (19) zumindest der zweiten Anschlussvorrichtung (8) oder die Öffnung (21) der dritten Anschlussvorrichtung (9) an einander gegenüberliegenden ersten und zweiten Endflächen (2C, 2D) des Außengehäuses (2) der Antriebs- und Versorgungseinheit (1) angeordnet sind.

2. Mit einer Hand haltbare Antriebs- und Versorgungseinheit (1) nach Anspruch 1, **dadurch gekennzeichnet, dass**
die erste Anschlussvorrichtung (6) zum lösbaren Anschließen eines dentalen Hand- oder Winkelstücks (7) und die zweite Anschlussvorrichtung (8) entlang einer Längsachse (30) der Antriebs- und Versorgungseinheit (1) angeordnet sind und die dritte Anschlussvorrichtung (9) seitlich versetzt zu der Längsachse (30) angeordnet ist.

3. Mit einer Hand haltbare Antriebs- und Versorgungseinheit (1) nach Anspruch 2, **dadurch gekennzeichnet, dass**
die erste Anschlussvorrichtung (6) zum lösbaren Anschließen eines dentalen Hand- oder Winkelstücks (7) und wahlweise die zweite Anschlussvorrichtung (8) oder die dritte Anschlussvorrichtung (9), vorzugsweise die zweite Anschlussvorrichtung (8) zum lösbaren Anschließen einer Batterie (10), in einer Schnittebene (14) durch die Antriebs- und Versorgungseinheit (1) angeordnet sind, die sich durch die gegenüberliegenden Enden (2C, 2D) der Antriebs- und Versorgungseinheit (1) erstreckt.

4. Mit einer Hand haltbare Antriebs- und Versorgungseinheit (1) nach Anspruch 3, **dadurch gekennzeichnet, dass**
die andere Anschlussvorrichtung der zweiten oder dritten Anschlussvorrichtung (8, 9), vorzugsweise die dritte Anschlussvorrichtung (9) zum lösbaren Anschließen eines Kühlfluidbehälters (11), versetzt zu und/ oder außerhalb der Schnittebene (14) angeordnet ist.

5. Mit einer Hand haltbare Antriebs- und Versorgungseinheit (1) nach Anspruch 4, **dadurch gekennzeichnet, dass**
die versetzt zu und/ oder außerhalb der Schnittebene (14) angeordnete zweite oder dritte Anschlussvorrichtung (8, 9) zwischen den beiden in der Schnittebene (14) angeordneten Anschlussvorrichtung (6, 9; 6, 8) vorgesehen ist.

6. Mit einer Hand haltbare Antriebs- und Versorgungseinheit (1) nach einem der vorstehenden Ansprüche, **gekennzeichnet durch**
eine sich durch die Antriebs- und Versorgungseinheit (1) erstreckende Mittelebene (15), wobei die erste Anschlussvorrichtung (6) auf einer ersten Seite (16) der Mittelebene (15) und die zweite und dritte Anschlussvorrichtung (8, 9) auf einer anderen, zweiten Seite (17) der Mittelebene (15) angeordnet sind.

7. Mit einer Hand haltbare Antriebs- und Versorgungseinheit (1) nach einem der vorstehenden Ansprüche, **dadurch gekennzeichnet, dass**
der Elektromotor (3) anschließend an die erste Anschlussvorrichtung (6) und/ oder fluchtend mit der ersten Anschlussvorrichtung (6) angeordnet ist.

8. Mit einer Hand haltbare Antriebs- und Versorgungseinheit (1) nach Anspruch 6 oder 7, **dadurch gekennzeichnet, dass**
der Elektromotor (3) mit der ersten Anschlussvorrichtung (6) auf der ersten Seite (16) der Mittelebene (15) angeordnet ist.

9. Mit einer Hand haltbare Antriebs- und Versorgungseinheit (1) nach Anspruch 6, 7 oder 8, **dadurch gekennzeichnet, dass**
der Elektromotor (3) derart in Bezug auf die zweite Anschlussvorrichtung (8) und/ oder eine mit der zweiten Anschlussvorrichtung (8) verbundenen Batterie (10) angeordnet ist, dass sich die Mittelebene (15) zwischen dem Elektromotor (3) und der zweiten Anschlussvorrichtung (8) und/ oder der mit der zweiten Anschlussvorrichtung (8) verbundenen Batterie (10) erstreckt.

10. Mit einer Hand haltbare Antriebs- und Versorgungseinheit (1) nach einem der vorstehenden Ansprüche, **dadurch gekennzeichnet, dass**
die Steuervorrichtung (5) zum Steuern der Antriebs- und Versorgungseinheit (1) eine Platine (18) aufweist, die zwischen dem Elektromotor (3) und der zweiten Anschlussvorrichtung (8) und/ oder einer mit der zweiten Anschlussvorrichtung (8) verbundenen Batterie (10) angeordnet ist.

11. Mit einer Hand haltbare Antriebs- und Versorgungseinheit (1) nach einem der vorstehenden Ansprüche, **dadurch gekennzeichnet, dass**
die zweite Anschlussvorrichtung (8) die Öffnung (19) und eine, vorzugsweise zylindrische, Aufnahme (20) aufweist, in welche die Batterie (10) einführbar ist.

12. Mit einer Hand haltbare Antriebs- und Versorgungseinheit (1) nach einem der vorstehenden Ansprüche, **dadurch gekennzeichnet, dass**
die dritte Anschlussvorrichtung (9) die Öffnung (21) und eine, vorzugsweise zylindrische, Aufnahme (22) aufweist, in welche der Kühlfluidbehälter (11) einführbar ist.

13. Mit einer Hand haltbare Antriebs- und Versorgungseinheit (1) nach einem der vorstehenden Ansprüche, **dadurch gekennzeichnet, dass**
die dritte Anschlussvorrichtung (9) eine fluidübertragende Schnittstelle (23) zur Verbindung mit einem Kühlfluidbehälter (11) aufweist, über die Kühlfluid von dem Kühlfluidbehälter (11) in die Antriebs- und Versorgungseinheit (1) übertragbar ist.

14. Mit einer Hand haltbare Antriebs- und Versorgungseinheit (1) nach einem der vorstehenden Ansprüche, **dadurch gekennzeichnet, dass**
die erste Anschlussvorrichtung (6) einen Kupplungszapfen (24) aufweist, auf den das Hand- oder Winkelstück (7) fluid- und Antriebskraft übertragend aufsteckbar ist.

15. Dentale Implantationsvorrichtung (25), **gekennzeichnet durch**
eine mit einer Hand haltbare Antriebs- und Versorgungseinheit (1) nach einem der vorstehenden Ansprüche, ein Hand- oder Winkelstück (7), eine Batterie (10) und einen Kühlfluidbehälter (11).

## Claims

1. A handheld drive and supply unit (1) for the implantation of dental implants having an outer housing (2) which separates the drive and supply unit (1) from the surroundings, comprising:
an electric motor (3) arranged in the outer housing (2) for rotationally driving a dental tool (4),
a control device (5) arranged in the outer housing (2) for controlling the drive and supply unit (1),
a first coupling device (6) provided on the outer housing (2) for detachably coupling a dental handpiece or contra-angle handpiece (7) to the drive and supply unit (1), for mechanically transmitting a rotational drive movement generated by the electric motor (3) to a shaft in the handpiece or contra-angle handpiece (7), and for conducting a cooling fluid from the drive and supply unit (1) into the handpiece or contra-angle handpiece (7),
a second coupling device (8) provided on or in the outer housing (2) for detachably coupling a battery (10) for supplying the electric motor (3) with electrical energy, and
a third coupling device (9) provided on or in the outer housing (2) for detachably coupling a cooling fluid container (11),
wherein the first, second and third coupling devices (6, 8, 9) are independent coupling devices separate from one another, **characterized in that**
the first coupling device (6) for detachably coupling a dental handpiece or contra-angle handpiece (7) and the opening (19) of at least the second coupling device (8) or the opening (21) of the third coupling device (9) are arranged on opposite first and second end faces (2C, 2D) of the outer housing (2) of the drive and supply unit (1).

2. The handheld drive and supply unit (1) according to claim 1, **characterized in that** the first coupling device (6) for detachably coupling a dental handpiece or contra-angle handpiece (7) and the second coupling device (8) are arranged along a longitudinal axis (30) of the drive and supply unit (1) and the third coupling device (9) is arranged laterally offset relative to the longitudinal axis (30).

3. The handheld drive and supply unit (1) according to claim 2, **characterized in that** the first coupling device (6) for detachably coupling a dental handpiece or contra-angle handpiece (7) and optionally the second coupling device (8) or the third coupling device (9), preferably the second coupling device (8) for detachably coupling a battery (10), are arranged in a sectional plane (14) through the drive and supply unit (1), which extends through the opposite ends (2C, 2D) of the drive and supply unit (1).

4. The handheld drive and supply unit (1) according to claim 3, **characterized in that** the other coupling device of the second or third coupling device (8, 9), preferably the third coupling device (9) for detachably coupling a cooling fluid container (11), is arranged offset from and/or outside the sectional plane (14).

5. The handheld drive and supply unit (1) according to claim 4, **characterized in that** the second or third coupling device (8, 9) arranged offset from and/or outside the sectional plane (14) is provided between the two coupling devices (6, 9; 6, 8) arranged in the sectional plane (14).

6. The handheld drive and supply unit (1) according to one of the preceding claims, **characterized by**
a central plane (15) extending through the drive and supply unit (1), wherein the first coupling device (6) is arranged on a first side (16) of the central plane (15) and the second and third coupling devices (8, 9) are arranged on another, second side (17) of the central plane (15).

7. The handheld drive and supply unit (1) according to one of the preceding claims, **characterized in that**
the electric motor (3) is arranged adjacent to the first coupling device (6) and/or in alignment with the first coupling device (6).

8. The handheld drive and supply unit (1) according to claim 6 or 7, **characterized in that** the electric motor (3) is arranged with the first coupling device (6) on the first side (16) of the central plane (15).

9. The handheld drive and supply unit (1) according to claim 6, 7 or 8, **characterized in that** the electric motor (3) is arranged with respect to the second coupling device (8) and/or a battery (10) connected to the second coupling device (8) such that the central plane (15) extends between the electric motor (3) and the second coupling device (8) and/or the battery (10) connected to the second coupling device (8).

10. The handheld drive and supply unit (1) according to one of the preceding claims, **characterized in that**
the control device (5) for controlling the drive and supply unit (1) comprises a circuit board (18) which is arranged between the electric motor (3) and the second coupling device (8) and/or a battery (10) connected to the second coupling device (8).

11. The handheld drive and supply unit (1) according to one of the preceding claims, **characterized in that**
the second coupling device (8) comprises the opening (19) and a, preferably cylindrical, receptacle (20) into which the battery (10) can be inserted.

12. The handheld drive and supply unit (1) according to one of the preceding claims, **characterized in that**
the third coupling device (9) comprises the opening (21) and a, preferably cylindrical, receptacle (22) into which the cooling fluid container (11) can be inserted.

13. The handheld drive and supply unit (1) according to one of the preceding claims, **characterized in that**
the third coupling device (9) has a fluid-transmitting interface (23) for connection to a cooling fluid container (11), via which cooling fluid can be transferred from the cooling fluid container (11) into the drive and supply unit (1).

14. The handheld drive and supply unit (1) according to one of the preceding claims, **characterized in that**
the first coupling device (6) has a coupling pin (24) onto which the handpiece or contra-angle handpiece (7) can be plugged such that fluid and driving force are transmitted.

15. A dental implantation device (25), **characterized by**
a handheld drive and supply unit (1) according to one of the preceding claims, a handpiece or contra-angle handpiece (7), a battery (10) and a cooling fluid container (11).

## Revendications

1. Unité d'entraînement et d'alimentation (1) pouvant être tenue d'une seule main, destinée à implanter des implants dentaires, dotée d'un boîtier extérieur (2), lequel délimite l'unité d'entraînement et d'alimentation (1) par rapport à l'environnement, comprenant:
un moteur électrique (3), placé dans le boîtier extérieur (2), destiné à entraîner en rotation un outil dentaire (4),
un dispositif de commande (5), placé dans le un boîtier extérieur (2), destiné à commander l'unité d'entraînement et d'alimentation (1),
un premier dispositif de raccordement (6), prévu sur le boîtier extérieur (2), destiné au raccordement amovible d'une pièce à main ou d'un contre-angle (7) dentaire sur l'unité d'entraînement et d'alimentation (1), pour la transmission mécanique d'un déplacement en entraînement rotatif généré par le moteur électrique (3) sur un arbre dans la pièce à main ou le contre-angle (7) et pour diriger un fluide de refroidissement de l'unité d'entraînement et d'alimentation (1) dans la pièce à main ou le contre-angle (7),
un deuxième dispositif de raccordement (8), prévu sur le boîtier extérieur (2), destiné au raccordement amovible d'une batterie (10), pour l'alimentation du moteur électrique (3) avec de l'énergie électrique et
un troisième dispositif de raccordement (9), prévu sur ou dans le boîtier extérieur (2), destiné au raccordement amovible d'un réservoir (11) de fluide de refroidissement,
le premier, le deuxième et troisième dispositifs de raccordement (6, 8, 9) étant des dispositifs de raccordement autonomes, séparés les uns des autres, **caractérisée en ce que**
le premier dispositif de raccordement (6), destiné au raccordement amovible d'une pièce à main ou d'un contre-angle (7) dentaire et l'orifice (19) au moins du deuxième dispositif de raccordement (8) ou l'orifice (21) du troisième dispositif de raccordement (9) sont placés sur des premières et deuxièmes surfaces d'extrémité (2C, 2D) situées en vis-à-vis l'une de l'autre du boîtier extérieur (2) de l'unité d'entraînement et d'alimentation (1).

2. Unité d'entraînement et d'alimentation (1) pouvant être tenue d'une seule main selon la revendication 1, **caractérisée en ce que**
le premier dispositif de raccordement (6) destiné au raccordement amovible d'une pièce à main ou d'un contre-angle (7) dentaire et le deuxième dispositif de raccordement (8) sont placés le long d'un axe longitudinal (30) de l'unité d'entraînement et d'alimentation (1) et le troisième dispositif de raccordement (9) est placé avec un décalage latéral par rapport à l'axe longitudinal (30).

3. Unité d'entraînement et d'alimentation (1) pouvant être tenue d'une seule main selon la revendication 2, **caractérisée en ce que**
le premier dispositif de raccordement (6), destiné au raccordement amovible d'une pièce à main ou d'un contre-angle (7) dentaire et sélectivement, le deuxième dispositif de raccordement (8) ou le troisième dispositif de raccordement (9), de préférence le deuxième dispositif de raccordement (8), destiné au raccordement amovible d'une batterie (10) sont placés dans un plan de coupe (14) à travers l'unité d'entraînement et d'alimentation (1) qui s'étend à travers les extrémités (2C, 2D) situées en vis-à-vis l'une de l'autre de l'unité d'entraînement et d'alimentation (1).

4. Unité d'entraînement et d'alimentation (1) pouvant être tenue d'une seule main selon la revendication 3, **caractérisée en ce que**
l'autre dispositif de raccordement parmi le deuxième ou le troisième dispositif de raccordement (8, 9), de préférence le troisième dispositif de raccordement (9), destiné au raccordement amovible d'un réservoir (11) de fluide de refroidissement, est placé avec un décalage par rapport au et / ou à l'extérieur du plan de coupe (14).

5. Unité d'entraînement et d'alimentation (1) pouvant être tenue d'une seule main selon la revendication 4, **caractérisée en ce que**
le deuxième ou le troisième dispositif de raccordement (8, 9) placé avec un décalage par rapport au et / ou à l'extérieur du plan de coupe (14) est prévu entre les deux dispositifs de raccordement (6, 9 ; 6, 8) placés dans le plan de coupe (14).

6. Unité d'entraînement et d'alimentation (1) pouvant être tenue d'une seule main selon l'une quelconque des revendications précédentes, **caractérisée par**
un plan médian (15) s'étendant à travers l'unité d'entraînement et d'alimentation (1), le premier dispositif de raccordement (6) étant placé sur un premier côté (16) du plan médian (15) et le deuxième et le troisième dispositifs de raccordement (8, 9) étant placés sur un autre, deuxième côté (17) do plan médian (15).

7. Unité d'entraînement et d'alimentation (1) pouvant être tenue d'une seule main selon l'une quelconque des revendications précédentes, **caractérisée en ce que**
le moteur électrique (3) est placé à la suite du premier dispositif de raccordement (6) et / ou en alignement avec le premier dispositif de raccordement (6).

8. Unité d'entraînement et d'alimentation (1) pouvant être tenue d'une seule main selon la revendication 6 ou 7, **caractérisée en ce que**
le moteur électrique (3) est placé avec le premier dispositif de raccordement (6) sur le premier côté (16) du plan médian (15).

9. Unité d'entraînement et d'alimentation (1) pouvant être tenue d'une seule main selon la revendication 6, 7 ou 8, **caractérisée en ce que**
le moteur électrique (3) est placé en rapport au deuxième dispositif de raccordement (8) et / ou à une batterie (10) assemblée avec le deuxième dispositif de raccordement (8) de telle sorte que le plan médian (15) s'étende entre le moteur électrique (3) et le deuxième dispositif de raccordement (8) et / ou la batterie (10) assemblée avec le deuxième dispositif de raccordement (8).

10. Unité d'entraînement et d'alimentation (1) pouvant être tenue d'une seule main selon l'une quelconque des revendications précédentes, **caractérisée en ce que**
le dispositif de commande (5), destiné à commander l'unité d'entraînement et d'alimentation (1) comporte une carte de circuit imprimé (18), qui est placée entre le moteur électrique (3) et le deuxième dispositif de raccordement (8) et / ou une batterie (10) assemblée avec le deuxième dispositif de raccordement (8).

11. Unité d'entraînement et d'alimentation (1) pouvant être tenue d'une seule main selon l'une quelconque des revendications précédentes, **caractérisée en ce que**
le deuxième dispositif de raccordement (8), comporte l'orifice (19) et un logement (20), de préférence cylindrique, dans lequel la batterie (10) est insérable.

12. Unité d'entraînement et d'alimentation (1) pouvant être tenue d'une seule main selon l'une quelconque des revendications précédentes, **caractérisée en ce que**
le troisième dispositif de raccordement (9) comporte l'orifice (21) et un logement (22), de préférence cylindrique, dans lequel le réservoir (11) de fluide de refroidissement est insérable.

13. Unité d'entraînement et d'alimentation (1) pouvant être tenue d'une seule main selon l'une quelconque des revendications précédentes, **caractérisée en ce que**
le troisième dispositif de raccordement (9) comporte une interface (23) de transmission de fluide, destinée à être assemblée avec un réservoir (11) de fluide de refroidissement, par l'intermédiaire de laquelle le fluide de refroidissement est transmissible du réservoir (11) de fluide de refroidissement dans l'unité d'entraînement et d'alimentation (1).

14. Unité d'entraînement et d'alimentation (1) pouvant être tenue d'une seule main selon l'une quelconque des revendications précédentes, **caractérisée en ce que**
le premier dispositif de raccordement (6) comporte un tenon d'accouplement (24), sur lequel la pièce à main ou le contre-angle (7) est emboîtable en transmettant du fluide et de la force d'entraînement.

15. Dispositif d'implantation dentaire (25), **caractérisé par**
une unité d'entraînement et d'alimentation (1) pouvant être tenue d'une seule main selon l'une quelconque des revendications précédentes, une pièce à main ou un contre-angle (7), une batterie (10) et un réservoir (11) de fluide de refroidissement.
